# FASCICULE DE BREVET EUROPEEN

(11) **EP 1 382 164 B1**
(45) Date de publication et mention de la délivrance du brevet: **08.11.2006**
(21) Numéro de dépôt: 02735505.6
(22) Date de dépôt: 26.04.2002
(51) Int. Cl.: H04L 12/413, H04L 29/08

(54) **DISPOSITIF DE GENERATION D'UNE MESSAGERIE COMMUNE A PLUSIEURS SYSTEMES ELECTRONIQUES PRODUISANT ET CONSOMMANT DES DONNEES**
GERÄT ZUR ERZEUGUNG EINES GEMEINSAMEN NACHRICHTENDIENSTES ZUR DATEN-BEREITSTELLUNG UND -NUTZUNG VON ELEKTRONISCHEN SYSTEMEN
DEVICE FOR GENERATING A MESSAGING SYSTEM COMMON TO SEVERAL ELECTRONIC SYSTEMS PRODUCING AND CONSUMING DATA

(30) Priorité: 27.04.2001 WO PCT/EP01/05713
(43) Date de publication de la demande: 21.01.2004
(73) Titulaire: Renault s.a.s., 92100 Boulogne Billancourt (FR)
(72) Inventeur: BOUTIN, Samuel, F-78114 Magny les Hameaux (FR); COUDERC, Damien, F-75008 Paris (FR)
(86) Numéro de dépôt international: PCT/FR2002/001453
(87) Numéro de publication internationale: WO 2002/089420

(56) Documents cités:
- US-A- 5 303 348
- US-A- 5 448 561
- US-A- 5 524 213

## Description

La présente invention est relative à un dispositif de génération d'une messagerie commune à plusieurs systèmes électroniques produisant et consommant des données échangées sur un bus de communication multiplexé commun, lesdites données étant portées par des trames de signaux numériques comportant chacune au moins une desdites données.

On connaît des ensembles de systèmes électroniques de ce type, conçus notamment pour équiper des véhicules automobiles, voir par exemple les demandes de brevets US 5,524,213 et US 5,448,561. Un tel véhicule comprend couramment plusieurs systèmes assurant chacun l'exécution d'une prestation telle que la commande du moteur propulsant le véhicule, la gestion de la climatisation de l'habitacle, la gestion des liaisons du véhicule au sol (freinage, suspension...), la gestion de communications téléphoniques, etc, etc...

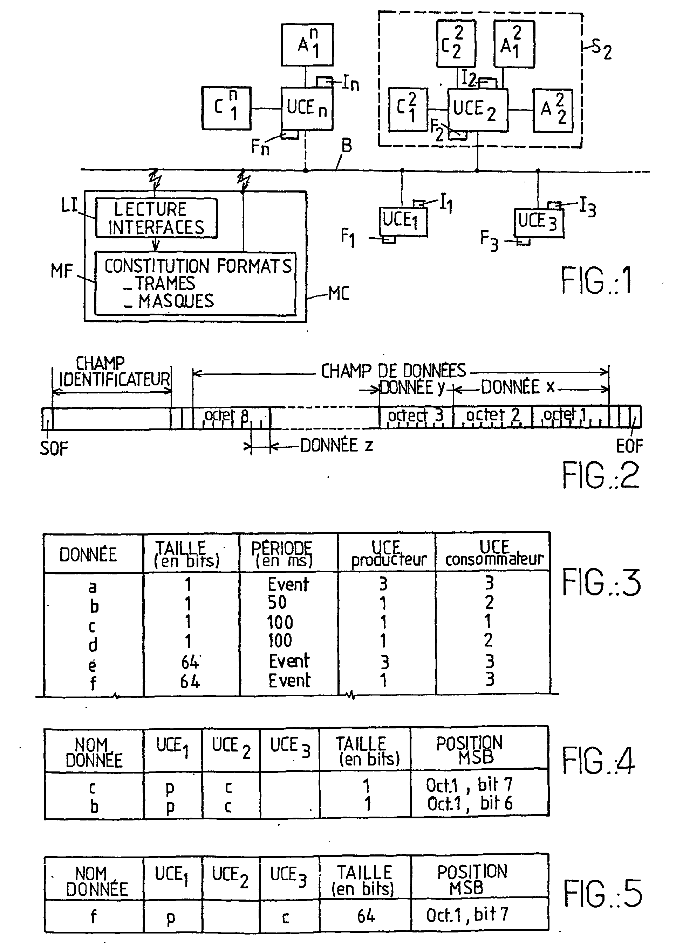

On a schématisé à la figure 1 du dessin annexé les moyens matériels qui constituent l'ensemble de ces systèmes. Ces moyens comprennent essentiellement des unités de commande électroniques ou "calculateurs" UCEₙ, chaque calculateur étant éventuellement connecté à des capteurs Cⁿᵢ et à des actionneurs A^{m}ⱼ, tous les calculateurs étant connectés à un même bus B pour y émettre ou recevoir des informations convenablement multiplexées, en provenance ou à destination des autres calculateurs connectés au bus B.

Ce multiplexage est obtenu notamment, comme cela est bien connu pour le bus CAN par exemple, en introduisant les informations en cause dans des messages matérialisés par des trames de signaux numériques comprenant notamment un "champ identificateur" de ladite trame et un "champ de données" réunissant couramment plusieurs informations de natures différentes (valeur d'une grandeur physique, état d'un organe, etc...) contenues chacune dans une partie prédéterminée de ce champ.

A titre d'exemple illustratif, le système S₂ de "commande du moteur" comprend le calculateur UCE₂, plusieurs capteurs C²ᵢ sensibles à des grandeurs telles que le régime du moteur, à combustion interne par exemple, la pression au collecteur d'admission de ce moteur, la pression de l'air extérieur, la température de l'eau de refroidissement du moteur, celle de l'air, l'état de charge de la batterie, etc, etc..., et plusieurs actionneurs A²ⱼ. Le calculateur UCE₂ est dûment programmé pour exécuter plusieurs fonctions de commande du moteur telles que : la régulation de ralenti, la régulation de la richesse du mélange air/carburant, le réglage de l'avance à l'allumage de ce mélange et la recirculation des gaz d'échappement. Pour ce faire le calculateur UCE₂ exploite des informations venues des capteurs C²ᵢ précités et élabore des signaux de commande des actionneurs A²ⱼ constitués par une vanne de commande d'air additionnel et une bobine d'allumage de bougie pour la fonction "régulation de ralenti", un injecteur de carburant pour la fonction "régulateur de richesse", la même bobine d'allumage pour la fonction "avance de l'allumage" et une vanne pour la fonction "recirculation de gaz d'échappement".

Les autres "prestations" évoquées ci-dessus, "climatisation de l'habitacle", "liaison avec le sol", etc... sont exécutées par des systèmes d'architecture analogue à celle présentée ci-dessus pour la commande du moteur.

Dans un tel contexte on appelle "messagerie" la liste des trames de signaux numériques qui, dans un véhicule donné, portent les données consommées ou produites par chacun des systèmes, ces données étant mises à disposition des autres systèmes sur le bus multiplexé qui les interconnecte.

Actuellement la construction d'une telle messagerie s'opère essentiellement pendant la phase du développement du véhicule. Les calculateurs des divers systèmes électroniques sont programmés pour recevoir et émettre des trames de signaux prédéterminés.

Lorsqu'un véhicule est produit dans plusieurs versions qui différent par leurs équipements ou par les prestations offertes, les messageries des diverses versions peuvent elles aussi présenter des différences. Pour chaque version, on adapte une messagerie de base, à l'aide de données de calibrage mises en mémoire dans les calculateurs des divers systèmes électroniques du véhicule.

Ce procédé de génération de messagerie est cependant peu souple, car il oblige à partir d'une messagerie de base, prédéfinie en phase de développement du véhicule, et donc de structure rigide, à l'aide d'un outil logiciel tel que VOLCANO, disponible auprès de la société de droit suédois dite Volcano Communication Technologies AB.

En outre, des versions différentes d'un même véhicule sortent aujourd'hui couramment, les unes derrière les autres, d'une même chaîne de fabrication. Il serait souhaitable de pouvoir charger chacun des véhicules avec une messagerie personnalisée qui lui est adaptée, par exemple juste avant sa sortie de chaîne. Un outil logiciel tel que celui mentionné ci-dessus, adapté à la construction progressive d'une messagerie pendant la phase de développement des diverses versions du véhicule, n'est pas structuré de manière à permettre la fourniture d'une telle prestation.

La présente invention a donc pour but de rêaliser ùn dispositif de génération d'une messagerie commune à plusieurs systèmes électroniques produisant et consommant des données, conçu pour lever les difficultés mentionnées ci-dessus et, en particulier, pour permettre le chargement d'une telle messagerie dans des véhicules automobiles progressant sur une même chaîne de fabrication, les messageries de chaque véhicule étant personnalisées en fonction des prestations et/ou des équipements particuliers à chacun de ces véhicules.

On atteint ce but de l'invention, ainsi que d'autres qui apparaîtront à la lecture de la description qui va suivre, avec un dispositif de génération d'une messagerie commune à plusieurs systèmes électroniques produisant et consommant des données échangées sur un bus de communication multiplexé interconnectant lesdits systèmes, lesdites données étant portées par des trames de signaux numériques comportant chacune au moins une desdites données, ce dispositif étant remarquable en ce que qu'il comprend a) des moyens pour lister des données potentiellement produites ou consommées par lesdits systèmes ainsi que les caractéristiques desdites données, b) des moyens de configuration des trames de signaux produites par chacun des systèmes, ces moyens comprenant : b1) des moyens de lecture du contenu desdits moyens de listage desdites données, b2) des moyens de constitution des formats desdites trames, à partir des informations réunies par lesdits moyens de lecture et de règles prédéterminées définissant une architecture de ladite messagerie conditionnant le fonctionnement du bus et desdits systèmes électroniques, et c) des moyens de chargement, dans chacun desdits systèmes, des formats de trames élaborés par lesdits moyens de constitution en vue de l'émission de trames chargées de données produites par ledit système.

Comme on le verra plus loin en détails, ce dispositif permet d'optimiser la structure de la messagerie chargée dans chaque véhicule, tout en simplifiant le processus de développement de cette messagerie.

Selon d'autres caractéristiques de la présente invention :
- les moyens de listage sont constitués par une pluralité de moyens d'interface associés chacun à un desdits systèmes électroniques et listant les données potentiellement produites ou consommées par ledit système,
- chacun des systèmes électroniques comprend une unité de commande électronique, les moyens d'interface étant constitués par des mémoires électroniques associées chacune à l'une desdites unités de commande électronique,
- lesdites mémoires électroniques stockent des caractéristiques desdites données choisies dans le groupe formé par : la précision de la donnée, la périodicité de sa présentation sur le bus, l'identité de l'unité de commande qui produit la donnée, l'identité de la, ou des, unités de commande qui la consomment,
- les moyens de constitution de format de trame procèdent selon une méthode heuristique,
- le dispositif comprend en outre des moyens de constitution de format de masques pour la lecture, par chacun desdits systèmes, des données qu'ils consomment et qui sont incorporées à des trames produites par les autres systèmes,
- les systèmes électroniques sont embarqués dans un véhicule automobile où ils sont interconnectés dans un bus de communication du type CAN, les moyens de configuration de trames ou de masques étant incorporés à un ordinateur placé au bord d'une chaîne de fabrication de véhicules automobiles, des moyens de communication sans fil étant installés entre cet ordinateur et le bus.

D'autres caractéristiques et avantages de la présente invention apparaîtront à la lecture de la description qui va suivre et à l'examen du dessin annexé dans lequel :
- la figure 1 est un schéma du dispositif de génération de messagerie suivant la présente invention, figure déjà partiellement décrite en préambule de la présente description,
- la figure 2 représente le format d'une trame de signaux numériques représentative de celles générées par le dispositif suivant l'invention,
- la figure 3 est une table, établie par le dispositif de la figure 1, listant les données à introduire dans des trames de signaux numériques formatées par ce dispositif, et
- les figures 4 et 5 sont des exemples illustratifs de tables, établies par ce dispositif, listant les données contenues dans des trames de signaux numériques formant partie de la messagerie générée par le dispositif suivant l'invention.

On se réfère à la figure 1 du dessin annexé où il apparaît que les calculateurs UCE₁... UCEₙ, etc,... des systèmes électroniques sont équipés chacun de moyens d'interface I₁, ... Iₙ, etc respectivement, constitués par des mémoires ROM, par exemple. Dans ces mémoires sont listées les données potentiellement émises ou produites et les données potentiellement consommées par le système associé, en deux tables séparées. Pour chacune de ces données, la mémoire Iₙ associée au calculateur UCEₙ liste le nom de la donnée, sa précision, ou "taille", en bits et la périodicité de la présentation de cette donnée sur le bus. C'est ainsi que, par exemple, certaines données peuvent être présentées sur le bus toutes les 50 ms, d'autres toutes les 100 ou 200 ms. C'est le cas des données qui doivent être, en pratique, constamment disponibles telles que, dans un système électronique de gestion d'un moteur à combustion interne, la pression au collecteur d'admission ou le régime du moteur. D'autres données peuvent n'être émises sur le bus qu'à la survenance d'un "événement" (Event) particulier.

Toutes les données produites ou consommées par l'ensemble des systèmes S₁,... Sₙ, etc sont, suivant l'invention, mises en trames de signaux numériques. A titre d'exemple illustratif et non limitatif seulement, on a représenté à la figure 2 du dessin annexé le format d'une telle trame de tels signaux, du type CAN bien connu.

Une trame CAN comporte ainsi divers champs, champ SOF de début de trame, champ EOF de fin de trame, etc... et, notamment, un champ identificateur et un champ de données pouvant contenir plusieurs données différentes, enregistrées dans des zones distinctes x, y, z, ... de ce champ, qui compte 8 octets.

Chaque trame réunit des données produites par un même "noeud" de l'ensemble des systèmes électroniques de la figure 1, soit par un même calculateur UCEₙ.

Pour construire les jeux de trames que chaque calculateur doit émettre, le dispositif suivant l'invention comprend des moyens MC de configuration de ces trames.

Suivant une caractéristique avantageuse de ce dispositif, ces moyens sont constitués par un ordinateur placé, dans l'application "automobile" décrite en préambule de la présente description, au bord d'une chaîne de fabrication de véhicules automobiles, de manière à pouvoir dialoguer avec chacun des calculateurs UCEₙ embarqués dans un même véhicule, par l'intermédiaire du bus B et de moyens de liaison bidirectionnels (non représentés), installés entre l'ordinateur et ce bus. Avantageusement ces moyens de liaison sont du type "sans fil" et fonctionnent en radio-fréquence ou en hyperfréquence, par exemple.

Grâce à cette liaison, les moyens MC de configuration des trames dont l'ensemble constitue la "messagerie" à générer, peuvent lire le contenu des interfaces Iₙ des calculateurs d'un véhicule qui va sortir de chaîne de fabrication, analyser ce contenu et construire un ensemble cohérent de formats de trames contenant les données, les formats de trames associés à chacun des calculateurs UCEₙ étant ensuite enregistrés dans des moyens Fₙ de chargement de ces formats associés aux calculateurs respectifs (voir Figure 1), en même temps que les moyens logiciels permettant de construire ces trames, ou d'extraire des données pertinentes des trames accessibles sur le bus.

On comprend qu'il est alors possible de charger, en bord de chaîne, des versions différentes d'un même véhicule qui sortent successivement de cette chaîne, avec des messageries "personnalisées", étroitement adaptées à chaque version.

On gère ainsi au mieux le problème posé par la diversité des fonctionnalités qui sont incorporées à des véhicules qui sortent dans des versions différentes d'une même chaîne de fabrication, tout en permettant de réduire le travail de développement qui serait autrement nécessaire pour traiter, en amont de la chaîne, le problème de l'installation des diverses messageries requises par des véhicules différents.

Comme schématisé à la figure 1, les moyens MC de configuration du dispositif suivant l'invention comprennent essentiellement des moyens LI de lecture du contenu des moyens d'interface Iₙ et des moyens MF de constitution de formats de trames et, comme on le verra plus loin, de formats de masques.

Les moyens LI de lecture d'interfaces sont des moyens logiciels qui, à partir des informations contenues dans l'ensemble des moyens d'interface Iₙ associés aux calculateurs UCEₙ, permettent de former une table telle que celle illustrée par la figure 3, listant l'ensemble des données a, b, c, etc... produites ou consommées par les divers systèmes de l'ensemble schématisé à la figure 1 et, pour chaque donnée, sa "précision" ou taille, en bits, sa période de présentation sur le bus B, l'identité du calculateur qui la produit et celle(s) du (ou des) calculateur(s) qui la consomme(nt).

C'est ainsi que la donnée nommée b occupe, dans la trame qui la porte, 1 bit du champ de données. Elle apparaît sur le bus B toutes les 50 ms, cette donnée b étant produite par le calculateur UCE₁ et consommée par le calculateur UCE₂. De même, la donnée e dont la taille couvre les 8 octets (64 bits) du champ de données d'une même trame CAN, et qui est produite et consommée par le calculateur UCE₃, n'apparaît sur le bus qu'à la survenance d'un événement (Event) particulier attaché à cette donnée.

La liaison sans fil établie entre l'ordinateur MC de bord de chaîne et les diverses interfaces Iₙ utilise un protocole de communication convenant à une telle liaison, par exemple le protocole Bluetooth décrit dans le document intitulé "Bluetooth specification v. 1.0B" édité par Dan Sönnerstan de la société suédoise dite Pyramid Communication AB.

Les moyens MF de constitution de formats de trames sont des moyens logiciels qui, à partir des informations réunies dans la table de la figure 3 par les moyens LI de lecture d'interface, et de règles qui seront définies dans la suite de la présente description, définissent une architecture de la messagerie à charger dans l'ensemble des systèmes électroniques de la figure 1, c'est-à-dire les formats des diverses trames de signaux porteuses de données, produites par les différents "noeuds" de cet ensemble, c'est-à-dire par les différents calculateurs UCEₙ.

Pour ce faire les moyens logiciels MF constituent d'abord des listes de toutes les données émises par un même calculateur, puis classe ces données en fonction de leur période de présentation (ou de "production") sur le bus B. Ensuite, par une méthode d'auto-apprentissage, ou heuristique, les moyens MF assurent un regroupement optimal des données en trames, par l'application de règles prédéterminées telles que :
- chaque trame contient des données produites par un même calculateur,
- le nombre de trames produites par un même calculateur est minimisé,
- le nombre de trames lues par un même calculateur est minimisé,
- les périodes de présentation des données d'une même trame sont identiques ou compatibles,
- les longueurs des trames émises sont équilibrées, dans la mesure du possible.

Ces règles ont pour but de minimiser la charge du bus, notamment le nombre de requêtes d'interruption intempestives, déclenchées lorsqu'une trame arrive sur un calculateur consommateur d'une donnée contenue dans la trame.

L'algorithme de construction de trames défini par les règles énoncées ci-dessus peut évidemment être modifié ou complété par d'autres règles éventuelles, en tant que de besoin.

On remarquera que certaines trames construites à l'aide ce cet algorithme peuvent être lacunaires, en ce sens qu'il reste dans le champ de données de ces trames des parties inoccupées, qui peuvent donc être occupées par des données à venir. Celles-ci devront respecter la période de production de la trame d'accueil et donc présenter une période supérieure ou égale à celle de cette dernière.

Les tables des figures 4 et 5 réunissent les caractéristiques de deux formats de trames représentatifs de ceux des jeux de trames calculés par les moyens MC de configuration du dispositif suivant l'invention, ces trames étant données à titre d'exemple illustratif et non limitatif seulement.

Chaque trame est nommée et chacune des données portées par cette.trame est identifiée par un nombre codé, sur 16 bits par exemple, contenant divers champs identifiant respectivement la prestation du véhicule à laquelle participe la donnée, la fonction qui utilise la donnée et le nom proprement dit de la donnée.

La trame définie par la table de la figure 4 porte aini les données c et b de la table de la figure 3. La donnée c est produite (P) par le calculateur UCE₁ et consommée (C) par le calculateur UCE₂. Sa taille est de 1 bit, positionné au bit 7 de l'octet N° 1 (voir figure 2) du champ de données de la trame. La donnée b présente les mêmes caractéristiques à l'exception du fait qu'elle est positionnée au bit 6 de l'octet N° 1.

La trame définie par la table de la figure 5 ne comporte qu'une donnée f produite par le calculateur UCE₁ et consommée par le calculateur UCE₃, sa taille est de 64 bits, le bit (MSB) de plus fort poids étant positionné au bit N° 7 de l'octet N° 1.

Les formats de trame établis par les moyens MF de constitution de formats correspondent à des trames dont les priorités sont, dans le cas d'un bus CAN, déterminées par le contenu du champ identificateur de ces trames.

A titre d'exemple illustratif et non limitatif seulement, l'attribution d'une priorité aux diverses trames peut se faire en application du critère dit "Rate Monotonic" tel que décrit dans l'ouvrage de Klein, M.H et al intitulé "A Practitioner's Handbook for Real-Time Analysis : Guide to Rate Monotonic Analysis for Real-Time Systems", Boston, USA, MA; éditeur . Kluwer Academic Publishers, 1993. pour les trames périodiques, avec éventuellement une correction apportée par le degré de criticité de l'information véhiculée par la trame. Les trames émises à la suite d'un événement pourront avoir une priorité plus élevée que les autres et seront hiérarchisées entre elles en fonction de la criticité déclarée des données et, éventuellement, en fonction d'un classement de niveau de priorité par systèmes (contrôle moteur, climatisation, habitacle, etc...).

Les diverses versions de messagerie calculées par l'ordinateur MC en bord de chaîne peuvent avantageusement être mémorisées dans celui-ci. Ainsi quand deux véhicules d'une même version se présentent successivement devant cet ordinateur, l'ordinateur n'a pas à réexécuter, pour le deuxième véhicule, les calculs déjà exécutés lors du passage du premier.

Les moyens MF de constitution de format calculent d'abord, comme décrit ci-dessus, les formats de la messagerie à établir pour un véhicule donné. A partir de ces formats, ils calculent ensuite des formats de masques. Ces masques sont utilisés, par chacun des calculateurs UCEₙ, pour déterminer, parmi toutes les trames présentées sur le bus B, celles qui contiennent des données qu'ils exploitent, puis pour repérer sur ces trames la ou les positions de ces données dans les champs de données, afin de lire les données repérées.

Les formats de trames et les formats de masques utilisés par chaque calculateur UCEₙ sont stockés dans les moyens de chargement de formats Fₙ associés à ce calculateur, ces moyens étant constitués par une mémoire morte du type "E2PROM" par exemple.

Sont également stockés dans cette mémoire les moyens logiciels permettant de construire les trames et les masques, à partir des données définissant les formats de ceux-ci.

Le dispositif suivant l'invention fonctionne alors comme suit. Différentes versions d'un même véhicule avancent successivement sur une chaîne de fabrication au bord de laquelle l'ordinateur MC de ce dispositif est installé. Quand un véhicule arrive au droit de l'ordinateur MC, celui-ci interroge à l'aide des moyens de communication sans fil évoqués plus haut, les divers calculateurs UCEₙ embarqués dans le véhicule de manière à le reconnaître. Pour ce but, à chacun de ces calculateurs est attaché un identificateur prédéterminé, reconnu par l'ordinateur. Avantageusement, cet identificateur définit en outre un ordre de priorité dans les systèmes associés aux calculateurs identifiés.

On peut prévoir aussi des moyens de sécurisation des communications entre un véhicule et l'ordinateur, afin d'empêcher des accès au bus indésirables (piratage, sabotage; etc...). Pour ce faire chaque calculateur peut contenir un code qui est exécuté une fois seulement préalablement au lancement des opérations de configuration de trames et de masques. Ce code permet au calculateur de répondre aux requêtes de l'ordinateur MC de configuration en donnant son identité, puis la liste des données qu'il doit recevoir et ensuite celle des données qu'il doit produire. L'ordinateur interroge chaque calculateur dans l'ordre défini par la priorité intégrée à l'identificateur de ce calculateur et configure les trames et masques associés à ce calculateur comme décrit ci-dessus. Il charge enfin les configurations calculées et les moyens logiciels de construction de trames et masques à partir de ces configurations, dans la mémoire Fₙ associée. L'ordinateur MC charge aussi dans cette mémoire les alarmes et événements à surveiller.

A titre d'exemple illustratif et non limitatif seulement, on décrit ci-dessous en plus de détail un mode de réalisation des moyens utilisés pour générer des trames et pour extraire des données de celles-ci.

On définit, pour ce faire, des vecteurs d'activation des trames, des vecteurs de trames et des tableaux de trames. Pour chaque trame et chaque donnée, les tableaux définissent la position de la donnée dans la trame et la position de cette même donnée en mémoire.

Périodiquement, par exemple toutes les 5 ms, les moyens logiciels examinent s'il y a lieu d'émettre une trame. Le cas échéant ils procèdent tout d'abord à une mise à jour des vecteurs de trames.

Si une donnée doit être envoyée immédiatement, la production de la donnée commande la mise à "1" d'un bit d'activation de la trame correspondante, dans le vecteur d'activation des trames.

Si la donnée doit être envoyée périodiquement au moyen d'une trame périodique, le bit d'activation de cette trame est mis à 1, dans le vecteur d'activation des trames, avec une fréquence correspondante.

Le vecteur d'activation des trames est parcouru périodiquement, par exemple toutes les 5ms, pour lancer la procédure d'envoi de toutes les trames pour lesquelles le bit d'activation est à 1 dans ce vecteur d'activation des trames.

Le tableau de trames permet de retrouver en mémoire les valeurs des données à émettre dans les trames activées.

En sens inverse, pour recevoir des données en trames, la procédure peut être la suivante. L'arrivée de la trame sur le bus déclenchant une interruption, cette interruption déclenche une tâche, consistant à stocker la trame dans une mémoire tampon. Après lecture de l'identifiant de cette trame, contenu dans le champ identificateur de celle-ci, et lecture dans le vecteur de trames du début du tableau de trame correspondant, la tâche relève dans celui-ci les données de la trame qui sont à lire puis à écrire en mémoire RAM, pour rafraîchir les données contenues dans celle-ci.

Les masques permettant de sélectionner les trames qui doivent être exploitées par telle ou telle unité centrale UCEᵢ, sont aussi élaborés par le dispositif de génération de messagerie suivant l'invention.

Il apparaît maintenant que l'invention permet bien d'atteindre les buts annoncés, à savoir assurer la génération d'une messagerie personnalisée pour un ensemble de systèmes électroniques embarqués dans un véhicule automobile, et le chargement de cette messagerie dans ce véhicule, depuis le bord de sa chaîne de fabrication, ceci de manière particulièrement efficace et rationnelle.

On remarquera en outre que la génération de messagerie suivant la présente invention permet de réduire le temps de développement de cette messagerie. Le processus de génération proposé peut encore être mis en oeuvre sans difficultés par des modifications progressives du processus classique actuel, intervenant essentiellement en phase de développement.

Bien entendu la présente invention n'est pas limitée au mode de réalisation décrit et représenté, qui n'a été donné qu'à titre d'exemple. C'est ainsi que la lecture des informations sur les échanges de données stockées dans les moyens d'interface Iₙ pourrait être remplacée par la constitution préalable d'une base de données réunissant ces informations, ceci, cependant, au détriment de la souplesse du dispositif suivant l'invention.

C'est ainsi encore que le dispositif de génération de messagerie décrit ci-dessus dans le contexte d'un ensemble de systèmes électroniques embarqués dans un véhicule automobile, pourrait s'adapter sans difficulté à tout ensemble de calculateurs fonctionnant en réseau, comme cela apparaîtra immédiatement à l'homme de métier.

## Revendications

1. Dispositif de génération d'une messagerie commune à plusieurs systèmes électroniques (Sₙ) produisant et consommant des données (a, b, c, ...) échangées sur un bus (B) de communication multiplexé interconnectant lesdits systèmes, lesdites données (a, b, c,...) étant portées par des trames de signaux numériques comportant chacune au moins une desdites données, ce dispositif étant **caractérisé en ce que** qu'il comprend :
a) des moyens (Iₙ) pour lister les données susceptibles d'être produites ou utilisées par lesdits systèmes ainsi que les caractéristiques desdites données,
b) des moyens (MC) de configuration des trames de signaux produites par chacun desdits systèmes, ces moyens comprenant :
b1) des moyens (LI) de lecture du contenu desdits moyens (Iₙ) de listage desdites données,
b2) des moyens (MF) de constitution des formats desdites trames, à partir des informations réunies par lesdits moyens de lecture (LI), et de règles prédéterminées définissant une architecture de ladite messagerie conditionnant le fonctionnement du bus et desdits systèmes électroniques, et
c) des moyens (Fₙ) de chargement, dans chacun desdits systèmes (Sₙ), de formats de trames élaborées par lesdits moyens (MC) de constitution en vue de l'émission de trames chargées de données produites par ledit système.

2. Dispositif conforme à la revendication 1, **caractérisé en ce que** lesdits moyens de listage sont constitués par une pluralité de moyens d'interface (Iₙ) associés chacun à un desdits systèmes électroniques (Sₙ) et listant les données potentiellement produites ou consommées par ledit système.

3. Dispositif conforme à la revendication 2, **caractérisé en ce que** chacun desdits systèmes électroniques (Sₙ) comprend une unité de commande électronique (UCEₙ), et **en ce que** lesdits moyens d'interface (Iₙ) sont constitués par des mémoires électroniques associées chacune à l'une desdites unités de commande électronique (UCEₙ).

4. Dispositif conforme à la revendication 3, **caractérisé en ce que** lesdites mémoires électroniques (Iₙ) stockent des caractéristiques desdites données choisies dans le groupe formé par : la précision de la donnée, la périodicité de sa présentation sur le bus (B), l'identité de l'unité de commande qui produit la donnée, l'identité de la, ou des, unités de commande qui la consomment.

5. Dispositif conforme à la revendication 4, **caractérisé en ce que** lesdites règles mises en oeuvre par lesdits moyens (MF) de constitution de formats de trames sont choisies dans le groupe formé par : a) chaque trame contient des données produites par une même unité de commande (UCEₙ), b) le nombre de trames produites par une même unité de commande, ou lues par cette unité, est minimisé, c) les périodicités de présentation des données contenues dans une même trame (T) sont identiques ou compatibles, d) les longueurs des trames sont équilibrées.

6. Dispositif conforme à la revendication 5, **caractérisé en ce que** lesdits moyens (MF) de constitution de formats de trames procèdent selon une méthode heuristique.

7. Dispositif conforme à l'une quelconque des revendications 1 à 6, **caractérisé en ce qu'**il comprend des moyens de constitution de formats de masques pour la lecture, par chacun desdits systèmes, des données qu'il consomme et qui sont incorporées à des trames produites par les autres systèmes.

8. Dispositif conforme à l'une quelconque des revendications 3 à 7, **caractérisé en ce que** lesdits formats de trames ou de masques associés à l'un quelconque (Sₙ) desdits systèmes électroniques sont chargés dans une mémoire électronique (Fₙ) associée à l'unité de commande (UCEₙ) dudit système (Sₙ).

9. Dispositif conforme à la revendication 8, **caractérisé en ce que** ladite mémoire (Fₙ) est également chargée avec des moyens logiciels de construction de trames ou de masques, à partir des formats stockés.

10. Dispositif conforme à l'une quelconque des revendications 1 à 9, **caractérisé en ce que** lesdits systèmes électroniques sont embarqués dans un véhicule automobile.

11. Dispositif conforme à la revendication 10, **caractérisé en ce que** le bus (B) de communication est du type CAN.

12. Dispositif conforme à l'une quelconque des revendications 10 et 11, **caractérisé en ce que** lesdits moyens (MF) de configuration de trames ou de masques sont incorporés à un ordinateur placé au bord d'une chaîne de fabrication de véhicules automobiles équipés chacun de ladite pluralité de systèmes électroniques (Sₙ) produisant et consommant des données échangées sur un bus (B) multiplexé.

13. Dispositif conforme à la revendication 12, **caractérisé en ce qu'**il comprend des moyens de communication sans fil installés entre ledit ordinateur et ledit bus (B), lesdits moyens étant activés pour la génération de ladite messagerie.

## Claims

1. Device for generating a messaging common to several electronic systems (Sₙ) producing and consuming data (a, b, c, ...) exchanged over a multiplexed communication bus (B) interconnecting the said systems, the said data (a, b, c, ...) being carried by digital signal frames each comprising at least one of the said data, this device being **characterized in that** it comprises:
a) means (Iₙ) for listing the data apt to be produced or used by the said systems as well as the characteristics of the said data,
b) means (MC) of configuring the signal frames produced by each of the said systems, these means comprising:
b1) means (LI) of reading of the content of the said means (Iₙ) of listing of the said data,
b2) means (MF) of construction of the formats of the said frames, on the basis of the information marshalled by the said means of reading (LI), and of predetermined rules defining an architecture of the said messaging conditioning the operation of the bus and of the said electronic systems, and
c) means (Fₙ) of loading, into each of the said systems (Sₙ), of formats of frames formulated by the said means (MC) of construction with a view to the sending of frames loaded with data produced by the said system.

2. Device in accordance with Claim 1, **characterized in that** the said means of listing are constituted by a plurality of interface means (Iₙ) each associated with one of the said electronic systems (Sₙ) and listing the data potentially produced or consumed by the said system.

3. Device in accordance with Claim 2, **characterized in that** each of the said electronic systems (Sₙ) comprises an electronic control unit (UCEₙ), and **in that** the said interface means (Iₙ) are constituted by electronic memories each associated with one of the said electronic control units (UCEₙ).

4. Device in accordance with Claim 3, **characterized in that** the said electronic memories (Iₙ) store characteristics of the said data chosen from the group formed by: the precision of the data, the periodicity of its presentation on the bus (B), the identity of the control unit which produces the data, the identity of the control unit or units which consume it.

5. Device in accordance with Claim 4, **characterized in that** the said rules implemented by the said means (MF) of construction of formats of frames are chosen from the group formed by: a) each frame contains data produced by one and the same control unit (UCEₙ), b) the number of frames produced by one and the same control unit, or read by this unit, is minimized, c) the periodicities of presentation of the data contained in one and the same frame (T) are identical or compatible, d) the lengths of the frames are balanced.

6. Device in accordance with Claim 5, **characterized in that** the said means (MF) of construction of formats of frames proceed according to a heuristic process.

7. Device in accordance with any one of Claims 1 to 6, **characterized in that** it comprises means of construction of formats of masks for the reading, by each of the said systems, of the data that it consumes and which are incorporated into frames produced by the other systems.

8. Device in accordance with any one of Claims 3 to 7, **characterized in that** the said formats of frames or of masks associated with any one (Sₙ) of the said electronic systems are loaded into an electronic memory (Fₙ) associated with the control unit (UCEₙ) of the said system (Sₙ).

9. Device in accordance with Claim 8, **characterized in that** the said memory (Fₙ) is also loaded with software means of building of frames or of masks, on the basis of the formats stored.

10. Device in accordance with any one of Claims 1 to 9, **characterized in that** the said electronic systems are embedded on board a motor vehicle.

11. Device in accordance with Claim 10, **characterized in that** the communication bus (B) is of the ADC type.

12. Device in accordance with any one of Claims 10 and 11, **characterized in that** the said means (MF) of configuration of frames or of masks are incorporated into a computer placed alongside a production line for manufacturing motor vehicles each of which is equipped with the said plurality of electronic systems (Sₙ) producing and consuming data exchanged over a multiplexed bus (B).

13. Device in accordance with Claim 12, **characterized in that** it comprises wireless communication means installed between the said computer and the said bus (B), the said means being activated for the generation of the said messaging.

## Patentansprüche

1. Vorrichtung zur Erzeugung einer mehreren Elektroniksystemen (Sₙ), die über einen die Systeme miteinander verbindenden Multiplex-Kommunikationsbus (B) ausgetauschte Daten (a, b, c, ...) erzeugen und verbrauchen, gemeinsamen Mitteilungsübermittlung, wobei die Daten (a, b, c, ...) von digitalen Signalrahmen getragen werden, die je mindestens eine der Daten enthalten, wobei diese Vorrichtung **dadurch gekennzeichnet ist, dass** sie aufweist:
a) Mittel (Iₙ), um die Daten, die von den Systemen erzeugt oder verwendet werden können, sowie die Eigenschaften der Daten aufzulisten,
b) Mittel (MC) zur Konfiguration der Signalrahmen, die von jedem der Systeme erzeugt werden, wobei diese Mittel aufweisen:
b1) Mittel (LI) zum Lesen des Inhalts der Mittel (In) zum Auflisten der Daten,
b2) Mittel (MF) zur Erstellung der Formate der Rahmen ausgehend von den Informationen, die von den Lesemitteln (LI) zusammengefasst werden, und von vorbestimmten Regeln, die eine Architektur der Mitteilungsübermittlung definieren, die den Betrieb des Busses und der elektronischen Systeme konditioniert, und
c) Mittel (Fₙ) zum Laden von Formaten von Rahmen in jedes der Systeme (Sₙ), die von den Erstellungsmitteln (MC) ausgearbeitet wurden, zum Senden von mit von dem System erzeugten Daten geladenen Rahmen.

2. Vorrichtung nach Anspruch 1, **dadurch gekennzeichnet, dass** die Auflistungsmittel aus mehreren Schnittstellenmitteln (Iₙ) bestehen, die je einem der Elektroniksysteme (Sₙ) zugeordnet sind und die Daten auflisten, die potentiell von dem System erzeugt oder verbraucht werden.

3. Vorrichtung nach Anspruch 2, **dadurch gekennzeichnet, dass** jedes der Elektroniksysteme (Sₙ) eine elektronische Steuereinheit (UCEₙ) aufweist, und dass die Schnittstellenmittel (Iₙ) aus elektronischen Speichern bestehen, die je einer der elektronischen Steuereinheiten (UCEₙ) zugeordnet sind.

4. Vorrichtung nach Anspruch 3, **dadurch gekennzeichnet, dass** die elektronischen Speicher (Iₙ) Eigenschaften der Daten speichern, die aus der Gruppe ausgewählt werden, die besteht aus: der Präzision des Datenwerts, der Periodizität seiner Präsentation im Bus (B), der Identität der Steuereinheit, die den Datenwert erzeugt, der Identität der ihn verbrauchenden Steuereinheit(en).

5. Vorrichtung nach Anspruch 4, **dadurch gekennzeichnet, dass** die von den Mitteln (MF) zur Erstellung von Rahmenformaten angewendeten Regeln aus der Gruppe ausgewählt werden, die besteht aus: a) jeder Rahmen enthält Daten, die von der gleichen Steuereinheit (UCEₙ) erzeugt werden, b) die Anzahl von von der gleichen Steuereinheit erzeugten oder von dieser Einheit gelesenen Rahmen wird minimiert, c) die Periodizitäten der Präsentation der in dem gleichen Rahmen (T) enthaltenen Daten sind gleich oder kompatibel, d) die Längen der Rahmen sind ausgeglichen.

6. Vorrichtung nach Anspruch 5, **dadurch gekennzeichnet, dass** die Mittel (MF) zur Erstellung von Rahmenformaten gemäß einer heuristischen Methode vorgehen.

7. Vorrichtung nach einem der Ansprüche 1 bis 6, **dadurch gekennzeichnet, dass** sie Mittel zur Erstellung von Formaten von Masken zum Lesen der Daten durch jedes der Systeme aufweist, die es verbraucht und die in Rahmen eingefügt sind, die von den anderen Systemen erzeugt werden.

8. Vorrichtung nach einem der Ansprüche 3 bis 7, **dadurch gekennzeichnet, dass** die Rahmen- oder Maskenformate, die einem beliebigen (Sₙ) der Elektroniksysteme zugeordnet sind, in einen elektronischen Speicher (Fₙ) geladen werden, der der Steuereinheit (UCEₙ) des Systems (Sₙ) zugeordnet ist.

9. Vorrichtung nach Anspruch 8, **dadurch gekennzeichnet, dass** der Speicher (Fₙ) ebenfalls mit Softwaremitteln für den Aufbau von Rahmen oder Masken ausgehend von den gespeicherten Formaten geladen wird.

10. Vorrichtung nach einem der Ansprüche 1 bis 9, **dadurch gekennzeichnet, dass** die Elektroniksysteme sich an Bord eines Kraftfahrzeugs befinden.

11. Vorrichtung nach Anspruch 10, **dadurch gekennzeichnet, dass** der Kommunikationsbus (B) vom Typ CAN ist.

12. Vorrichtung nach einem der Ansprüche 10 und 11, **dadurch gekennzeichnet, dass** die Mittel (MF) zur Konfiguration von Rahmen oder Masken in einen Computer eingesetzt sind, der sich am Rand einer Fertigungsstraße von Kraftfahrzeugen befindet, die je mit den mehreren Elektroniksystemen (Sₙ) ausgestattet sind, die auf einem Multiplexbus (B) ausgetauschte Daten erzeugen und verbrauchen.

13. Vorrichtung nach Anspruch 12, **dadurch gekennzeichnet, dass** sie Mittel zur drahtlosen Kommunikation aufweist, die zwischen dem Computer und dem Bus (B) installiert sind, wobei die Mittel zur Erzeugung der Mitteilungsübermittlung aktiviert werden.
